# FASCICULE DE BREVET EUROPEEN

(11) **EP 3 443 243 B1**
(45) Date de publication et mention de la délivrance du brevet: **09.09.2020**
(21) Numéro de dépôt: 17713750.2
(22) Date de dépôt: 13.03.2017
(51) Int. Cl.: F16H 57/04

(54) **CIRCUIT DE LUBRIFICATION D'UN ARBRE CREUX**
HOHLWELLENSCHMIERMITTELKREISLAUF
HOLLOW SHAFT LUBRICANT CIRCUIT

(30) Priorité: 15.04.2016 FR 1653347
(43) Date de publication de la demande: 20.02.2019
(73) Titulaire: PSA AUTOMOBILES S.A., 78300 Poissy (FR)
(72) Inventeur: POMAS, Stephane, 59530 Ruesnes (FR); BULTEZ, Didier, 59730 Vertain (FR)
(86) Numéro de dépôt international: PCT/FR2017/050559
(87) Numéro de publication internationale: WO 2017/178718

(56) Documents cités:
- FR-A1- 2 613 015
- FR-A1- 2 956 460
- JP-U- S6 246 818

## Description

L'invention porte sur un circuit de lubrification d'un arbre creux, sur une boîte de vitesses comprenant ce circuit, et sur un véhicule comprenant une telle boîte de vitesse. Le document FR2956460 décrit un tel circuit de lubrification.

L'invention vise notamment mais pas limitativement, des applications dans le domaine des systèmes de transmission des véhicules automobiles et en particulier les boîtes de vitesses de ces véhicules.

Dans ce domaine, une lubrification efficace des pièces tournantes conditionne la durée de vie des transmissions, ainsi qu'une limitation des pertes mécaniques par frottement. Des organes complexes, comme les boîtes de vitesses, sont sensibles à ces deux phénomènes de par le nombre important de pièces ajustées en rotation dans un environnement contraint mécaniquement et thermiquement.

Le document de brevet FR-A-2 877 065 divulgue une boîte de vitesses pour véhicule automobile comprenant un arbre de sortie monté rotatif dans un carter, des roues d'engrenages montées de manière rotative sur l'arbre de sortie pour les différentes vitesses et un dispositif de lubrification forcée des roues d'engrenages comprenant une canule d'alimentation en lubrifiant d'un alésage axial de l'arbre de sortie débouchant vers l'extérieur par des canaux radiaux. Ce document divulgue également un empilage de boîte de vitesses maintenu axialement sur l'arbre de sortie en étant coincé entre un épaulement de l'arbre de sortie, et une rondelle. Le blocage de l'ensemble est réalisé par l'intermédiaire d'une vis vissée dans l'arbre de sortie, la vis étant traversée par la canule.

Ce type de canule nécessite un jeu radial entre la canule et l'alésage axial de l'arbre ou de la vis, de sorte à ne pas induire des pertes mécaniques par frottement.

Un inconvénient de ce jeu radial est que de l'huile s'échappe par ce jeu, sans avoir pu participer à la lubrification des pièces en rotation.

De plus, la canule et les pièces portant la canule, doivent être précisément positionnées par rapport à l'alésage axial de l'arbre ou de la vis, pour pouvoir respecter ce jeu radial. Or la vis, de par ses tolérances géométriques et son assemblage vissé dans l'arbre, ne permet pas une telle précision, et oblige à augmenter ce jeu radial, ce qui aggrave l'inconvénient précité.

Un autre inconvénient consiste en ce que la canule traverse le corps creux de la vis, ce qui fait que la section minimale de passage d'huile de la canule est inférieure à celle de la vis, défavorisant l'écoulement de l'huile dans la canule.

Le but de l'invention est de remédier aux inconvénients précités.

A cet effet, l'invention a pour objet un circuit de lubrification d'un arbre tournant creux comportant une canule fixe d'amenée d'un lubrifiant dans une extrémité de l'arbre tournant creux, cette extrémité ayant une vis coaxiale à l'arbre creux, cette vis comprenant un trou coaxial traversant, ce circuit comportant en outre un embout disposé en prolongement de la canule, cet embout ayant un perçage axial et une lèvre élastique, et la lèvre élastique étant en appui radial dans le trou traversant.

En effet, l'embout et sa lèvre élastique en appui radial dans le trou traversant permet de réaliser une étanchéité du circuit de lubrification et de garder l'intégrité de cette étanchéité même si le trou traversant présente des dispersions géométriques par rapport à l'embout, comme un défaut de coaxialité de la vis dans l'arbre creux par exemple. L'élasticité de la lèvre permet de garder l'appui radial entre la lèvre et le trou traversant, par déformation élastique de la lèvre. La forme de lèvre permet de tolérer les grandes dispersions géométriques de la vis ou, d'un point de vue montage, autorise une plus grande dispersion de positionnement de la canule par rapport au trou traversant. La forme de la lèvre permet aussi de faciliter un centrage de la canule par rapport au trou traversant.

Ainsi, on voit que cette réalisation permet l'étanchéité du circuit d'huile tout en ayant un montage de la canule par rapport à la vis plus permissif en termes de dispersions géométriques.

De préférence, la lèvre élastique est positionnée dans la tête de la vis.

En effet, cette configuration est avantageuse pour des facilités de montage de la canule et de son embout dans le trou traversant de la vis.

Dans un mode de réalisation, le trou traversant présente au moins deux diamètres différents, et le diamètre du perçage de l'embout est égal ou supérieur au plus petit des diamètres du trou traversant.

En effet, pour ne pas rajouter une perte de charges à l'écoulement du lubrifiant dans le circuit de lubrification, il est avantageux que le diamètre de perçage de l'embout soit au moins égal au plus petit diamètre du trou traversant.

Dans un mode particulier de réalisation, la lèvre élastique a une conicité dont le sommet est orienté vers l'arbre creux.

En effet, la lèvre élastique étant sous forme de tronc de cône pour pouvoir s'appuyer sur toute la périphérie du trou traversant, a un sens de montage privilégié. Il est alors avantageux que la lèvre élastique soit orientée dans le sens qui permet un glissement axial naturel de la lèvre élastique dans le trou traversant lorsque l'on introduit l'embout dans le trou traversant. Ceci a également pour avantage de ne pas altérer la lèvre lors de son montage dans le trou traversant.

Dans un mode particulier de réalisation, l'embout est surmoulé à la canule.

En effet, ce mode de réalisation permet également de garantir la liaison mécanique et l'étanchéité au lubrifiant en même temps, entre la canule et l'embout.

Dans une variante, l'embout est emmanché sur la canule et maintenu par des clips.

En effet, ce mode de réalisation simple permet de garantir la liaison mécanique et l'étanchéité au lubrifiant en même temps, entre la canule et l'embout.

Selon une caractéristique particulière, l'embout est en plastique, élastomère, ou polytétrafluoroéthylène.

En effet, il est avantageux que l'embout et sa lèvre soient réalisés en une matière élastique, dont la raideur soit suffisante pour garantir l'appui radial de la lèvre dans le trou traversant.

Dans une variante, la lèvre élastique et l'embout sont réalisés en deux matières différentes par un procédé de bi-injection.

En effet, il est avantageux que l'embout soit réalisé en une première matière dont la raideur soit suffisante pour garantir le maintien mécanique de l'embout sur la canule, tout en ayant une lèvre élastique dans une deuxième matière dont l'élasticité soit suffisante pour garantir l'appui radial de la lèvre dans le trou traversant sans pour autant que l'appui radial soit excessif.

L'invention a également pour objet une boîte de vitesses comprenant au moins un circuit de lubrification tel que précédemment décrit.

L'invention a également pour objet un véhicule comprenant au moins une boîte de vitesse tel que précédemment décrite.

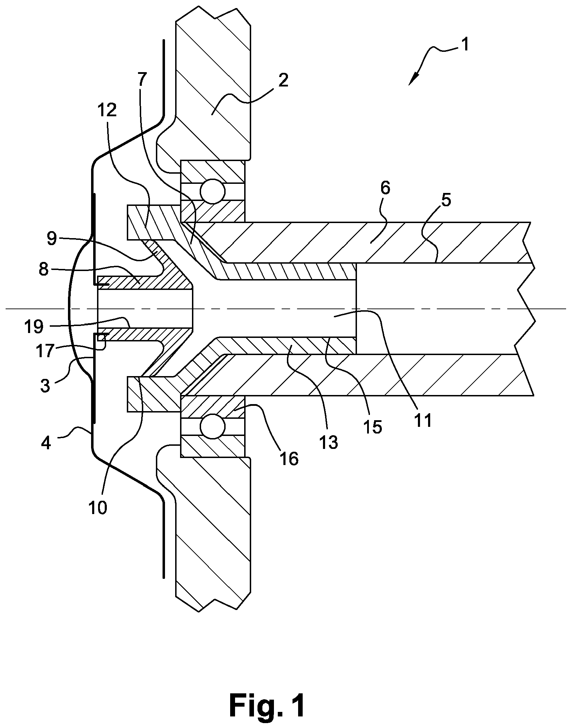

D'autres caractéristiques, buts et avantages de l'invention apparaîtront à la lecture de la description des exemples de réalisation non limitatifs qui vont suivre, faite en référence à la figure 1 annexée, qui représente :
- Figure 1 : un circuit de lubrification suivant un mode de réalisation de l'invention, pour une boîte de vitesses.

L'ensemble représenté sur la figure 1 comporte un circuit de lubrification d'un arbre tournant creux 6 comportant une canule fixe 3 d'amenée d'un lubrifiant, tel que de l'huile, dans une extrémité de l'arbre tournant creux 6, cette extrémité ayant une vis 7 coaxiale à l'arbre creux 6, cette vis 7 comprenant un trou coaxial traversant 11.

Ce circuit de lubrification comporte en outre un embout 8 disposé en prolongement de la canule 3, cet embout 8 ayant un perçage axial 19 et une lèvre élastique 9, la lèvre élastique 9 étant en appui radial dans le trou traversant 11.

La vis 7 de cet exemple comprend une tête de vis 12 et un corps de vis 13, et le trou traversant 11 présente deux diamètres constants différents dont le diamètre le plus grand est un alésage de tête 10 logé dans la tête de vis 12, la lèvre élastique 9 étant positionnée dans la tête de vis 12 et en appui sur l'alésage de tête 10. A l'état repos ou non monté dans le trou traversant 11, la lèvre 9 a un diamètre plus grand que celui de l'alésage de tête 10. Lorsque la lèvre 9 est positionnée dans l'alésage de tête 10, elle est comprimée de sorte à être précontrainte par son élasticité. Cette lèvre élastique 9 est précontrainte dans l'alésage de tête 10, de manière à pouvoir rester en appui sur l'alésage de tête 10 malgré des dispersions de géométrie et de positionnement de la vis 7 dans l'arbre tournant creux 6.

La lèvre élastique 9 étant positionnée en appui sur cet alésage de tête 10, cela permet également de loger une partie de l'embout 8 dans cet alésage de tête 10. Le diamètre de perçage axial 19 de l'embout 8 est inférieur au diamètre d'un alésage de corps 15, cet alésage de corps 15 correspondant au diamètre du trou traversant 11 dans le corps de vis 13. Ce diamètre de l'alésage de corps 15 est le plus petit diamètre du trou traversant 11.

Dans une variante de réalisation, le diamètre de perçage axial 19 de l'embout 8 est supérieur ou égal au diamètre de l'alésage de corps 15.

L'alésage de tête 10 et l'alésage de corps 15 sont reliés par une partie tronconique du trou traversant 11, cette partie tronconique et ces deux alésages 10, 15, formant la totalité du trou traversant 11.

Dans d'autres variantes de réalisation, le trou traversant 11 peut avoir toute autre forme, la lèvre 9 venant en appui sur un diamètre du trou 11 égal ou supérieur au plus petit des diamètres du trou 11.

la lèvre élastique 9 a une conicité dont le sommet est orienté vers l'arbre creux 6.

L'embout 8 est surmoulé à la canule 3, de sorte que la canule 3 sert également d'armature dans l'embout 8. Des aspérités 17 de la canule 3, comme des emboutis, des trous, ou des découpes, dépassent dans la matière de l'embout 8 de sorte à compléter la liaison mécanique entre ces deux pièces.

Dans une variante de réalisation, l'embout 8 est emmanché à force sur la canule 3, dans un diamètre intérieur à la canule 3, ou autour d'un diamètre extérieur à la canule 3, ou les deux à la fois.

Dans une variante de réalisation, l'embout 8 est emmanché sur la canule 3, et maintenu par des clips (non représentés). L'emmanchement est réalisé dans le diamètre intérieur à la canule 3, ou autour du diamètre extérieur à la canule 3, ou les deux à la fois. Les clips sont réalisés par complémentarité de forme entre la canule 3 et l'embout 8, en utilisant l'élasticité de la matière de l'embout 8.

L'embout 8 est en élastomère, matériau qui présente un compromis idéal entre raideur et élasticité, mais pourrait être aussi en plastique, notamment en polyamide et plus particulièrement en polyhexaméthylène adipamide PA6.6, ou à base de polytétrafluoroéthylène.

Dans une variante de réalisation, la lèvre élastique 9 et l'embout 8 sont réalisés en deux matières différentes par un procédé de bi-injection. L'embout est alors réalisé en une première matière. La raideur de cette première matière est choisie pour être suffisante pour garantir le maintien mécanique de l'embout 8 sur la canule 9. La lèvre élastique 9 est réalisée dans une deuxième matière. L'élasticité de cette deuxième matière doit être suffisante pour garantir l'appui radial de la lèvre 9 dans le trou traversant 11, ici l'alésage de tête 10, sans pour autant que l'appui radial soit excessif.

Ce circuit de lubrification fait partie, par exemple, d'une boîte de vitesses 1 comprenant un empilement de pignons (non représentés) et de roulements 16 sur l'arbre creux 6, par exemple des pignons fous, et la vis 7 est un blocage de cet empilement sur l'arbre creux 6.

L'arbre creux 6 est tournant par rapport à un carter 2 de la boîte de vitesses 1, et la canule 3 est fixe par rapport à ce carter 2, et y est fixée par l'intermédiaire d'un couvercle 4 de carter 2. De la sorte, l'arbre creux 6 est en rotation par rapport à la canule 3. L'embout 8 étant en prolongement de la canule 3, l'arbre creux 6 est également en rotation par rapport à l'embout 8, ce dernier étant fixe par rapport à la canule 3.

Le couvercle 4 de carter 2, a un isostatisme (non représenté) par rapport au carter 2 de deux à trois degrés de liberté, et l'embout 8 est alors un centreur du couvercle 4.

Dans une variante de réalisation, le couvercle 4 de carter 2 a un isostatisme (non représenté) par rapport au carter 2 sans degrés de liberté. Toutes les dispersions géométriques issues d'une chaine de cotes reliant l'embout 8 au trou traversant 11 sont absorbées par l'élasticité de la lèvre 9.

La canule 3 alimente l'arbre creux 6 en huile par le moyen d'une pompe (non représentée) permettant la mise sous pression de l'huile. On peut aussi remplacer la pompe à huile par un système de récupération d'huile par gravité, pour des systèmes à lubrification par barbotage.

La boîte de vitesses 1, est par exemple, intégrée dans la transmission d'un véhicule, en particulier d'un véhicule automobile.

## Revendications

1. Circuit de lubrification d'un arbre tournant creux (6) comportant une canule fixe (3) d'amenée d'un lubrifiant dans une extrémité dudit arbre tournant creux (6), ladite extrémité ayant une vis (7) coaxiale audit arbre creux (6), ladite vis (7) comprenant un trou coaxial traversant (11), **caractérisé en ce qu'**il comporte en outre un embout (8) disposé en prolongement de ladite canule (3), ledit embout (8) ayant un perçage axial (19) et une lèvre élastique (9), et **en ce que** la lèvre élastique (9) est en appui radial dans ledit trou traversant (11).

2. Circuit de lubrification selon la revendication 1, ladite vis (7) comprenant une tête de vis (12), **caractérisé en ce que** la lèvre élastique (9) est positionnée dans ladite tête de vis (12).

3. Circuit de lubrification selon la revendication 2, **caractérisé en ce que** ledit trou traversant (11) présente au moins deux diamètres différents, et **en ce que** le diamètre du perçage dudit embout (8) est égal ou supérieur au plus petit des diamètres du trou traversant (11).

4. Circuit de lubrification selon l'une des revendications précédentes, **caractérisé en ce que** la lèvre élastique (9) a une conicité dont le sommet est orienté vers ledit arbre creux (6).

5. Circuit de lubrification selon l'une des revendications précédentes, **caractérisé en ce que** ledit embout (8) est surmoulé à ladite canule (3).

6. Circuit de lubrification selon l'une des revendications 1 à 4, **caractérisé en ce que** ledit embout (8) est emmanché sur ladite canule (3), et maintenu par des clips.

7. Circuit de lubrification selon l'une des revendications précédentes, **caractérisé en ce que** ledit embout (8) est en plastique, élastomère, ou polytétrafluoroéthylène.

8. Circuit de lubrification selon l'une des revendications 1 à 6, **caractérisé en ce que** la lèvre élastique (9) et ledit embout (8) sont réalisés en deux matières différentes, notamment par un procédé de bi-injection.

9. Boîte de vitesses **caractérisée en ce qu'**elle comprend au moins un circuit de lubrification selon l'une des revendications précédentes.

10. Véhicule **caractérisé en ce qu'**il comprend au moins une boîte de vitesse selon la revendication 9.

## Patentansprüche

1. Schmierkreislauf einer hohlen rotierenden Welle (6) mit einer festen Kanüle (3) zum Zuführen eines Schmiermittels in ein Ende der hohlen rotierenden Welle (6), wobei das Ende eine Schraube (7) aufweist, die koaxial zu der hohlen Welle (In 6) umfasst die Schraube (7) ein koaxiales Durchgangsloch (11), das **dadurch gekennzeichnet ist, dass** sie ferner eine Spitze (8) umfasst, die als Verlängerung der Kanüle (3) angeordnet ist, wobei die Spitze (8) eine axiale Bohrung aufweist (19) und eine elastische Lippe (9), und dadurch trägt die elastische Lippe (9) radial in dem Durchgangsloch (11).

2. Schmierkreislauf nach Anspruch 1, wobei die Schraube (7) einen Schraubenkopf (12) umfasst, der **dadurch gekennzeichnet ist, dass** die elastische Lippe (9) in dem Schraubenkopf (12) positioniert ist.

3. Schmierkreislauf nach Anspruch 2, **dadurch gekennzeichnet, dass** das Durchgangsloch (11) mindestens zwei verschiedene Durchmesser aufweist und dass der Durchmesser der Bohrung des Endstücks (8) gleich oder größer als der kleinste der Durchmesser des Durchgangslochs ist (11).

4. Schmierkreislauf nach einem der vorhergehenden Ansprüche, **dadurch gekennzeichnet, dass** die elastische Lippe (9) eine Verjüngung aufweist, deren Spitze in Richtung der Hohlwelle (6) ausgerichtet ist.

5. Schmierkreislauf nach einem der vorhergehenden Ansprüche, **dadurch gekennzeichnet, dass** die Düse (8) auf die Kanüle (3) geformt ist.

6. Schmierkreislauf nach einem der Ansprüche 1 bis 4, **dadurch gekennzeichnet, dass** die Spitze (8) an der Kanüle (3) angebracht ist und von Clips gehalten wird.

7. Schmierkreislauf nach einem der vorhergehenden Ansprüche, **dadurch gekennzeichnet, dass** das Endstück (8) aus Kunststoff, Elastomer oder Polytetrafluorethylen besteht.

8. Schmierkreislauf nach einem der Ansprüche 1 bis 6, **dadurch gekennzeichnet, dass** die elastische Lippe (9) und die Spitze (8) aus zwei verschiedenen Materialien bestehen, insbesondere durch ein Bi-Injektionsverfahren.

9. Getriebe **dadurch gekennzeichnet, dass** es mindestens einen Schmierkreis nach einem der vorhergehenden Ansprüche umfasst..

10. Fahrzeug **dadurch gekennzeichnet, dass** es mindestens ein Getriebe nach Anspruch 9 umfasst.

## Claims

1. Lubrication circuit of a hollow rotating shaft (6) comprising a fixed cannula (3) for supplying a lubricant into one end of said hollow rotating shaft (6), said end having a screw (7) coaxial with said hollow shaft (6), said screw (7) comprising a coaxial through hole (11), **characterized in that** it further comprises a tip (8) arranged as an extension of said cannula (3), said tip (8) having an axial bore (19) and an elastic lip (9), and **in that** the elastic lip (9) bears radially in said through hole (11).

2. Lubrication circuit according to claim 1, said screw (7) comprising a screw head (12), **characterized in that** the elastic lip (9) is positioned in said screw head (12).

3. Lubrication circuit according to claim 2, **characterized in that** said through hole (11) has at least two different diameters, and **in that** the diameter of the bore of said tip (8) is equal to or greater than the smallest of the diameters of the through hole (11).

4. Lubrication circuit according to one of the preceding claims, **characterized in that** the elastic lip (9) has a taper the apex of which is oriented towards said hollow shaft (6).

5. Lubrication circuit according to one of the preceding claims, **characterized in that** said tip (8) is molded onto said cannula (3).

6. Lubrication circuit according to one of claims 1 to 4, **characterized in that** the said tip (8) is fitted onto the said cannula (3), and held by clips.

7. Lubrication circuit according to one of the preceding claims, **characterized in that** said tip (8) is made of plastic, elastomer or polytetrafluoroethylene.

8. Lubrication circuit according to one of claims 1 to 6, **characterized in that** the elastic lip (9) and said tip (8) are made of two different materials, in particular by a bi-injection process.

9. Gearbox **characterized in that** it comprises at least one lubrication circuit according to one of the preceding claims.

10. Vehicle **characterized in that** it comprises at least one gearbox according to Claim 9.
